(19) Europäisches Patentamt
European Patent Office
Office européen des brevets

(11) **EP 0 848 735 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(21) Anmeldenummer: **96919562.7**

(22) Anmeldetag: **17.05.1996**

(51) Int Cl.⁷: **C09C 1/00**, C09C 1/64

(86) Internationale Anmeldenummer:
**PCT/DE96/00890**

(87) Internationale Veröffentlichungsnummer:
**WO 96/38505 (05.12.1996 Gazette 1996/53)**

(54) **OXIDIERTE FARBIGE ALUMINIUMPIGMENTE, VERFAHREN ZU DEREN HERSTELLUNG SOWIE DEREN VERWENDUNG**

OXIDIZED COLOURED ALUMINIUM PIGMENTS, PROCESS FOR THEIR PRODUCTION AND THEIR USE

PIGMENTS D'ALUMINIUM COLORES OXYDES, LEUR PROCEDE DE PRODUCTION ET LEUR UTILISATION

(84) Benannte Vertragsstaaten:
**AT BE CH DE DK ES FI FR GB GR IE IT LI LU MC NL PT SE**

(30) Priorität: **02.06.1995 DE 19520312**

(43) Veröffentlichungstag der Anmeldung:
**24.06.1998 Patentblatt 1998/26**

(73) Patentinhaber: **ECKART-WERKE STANDARD BRONZEPULVER-WERKE CARL ECKART GMBH & CO.**
**D-90763 Fürth (DE)**

(72) Erfinder: **REISSER, Wolfgang**
**D-91220 Schnaittach (DE)**

(74) Vertreter:
**LOUIS, PÖHLAU, LOHRENTZ & SEGETH**
**Postfach 3055**
**90014 Nürnberg (DE)**

(56) Entgegenhaltungen:
**DE-A- 2 627 428**        **DE-A- 4 319 669**

- **DATABASE WPI Week 8516 Derwent Publications Ltd., London, GB; AN 85-095044 XP002013294 & JP,A,60 032 853 (KAO), 20.Februar 1985**
- **PATENT ABSTRACTS OF JAPAN vol. 13, no. 417 (C-636), 14.September 1989 & JP,A,01 153761 (MITSUBISHI MOTORS), 15.Juni 1989,**

**Beschreibung**

Die Erfindung betrifft farbige oxidierte Aluminiumpigmente, ein Verfahren zu ihrer Herstellung sowie deren Verwendung.

Aluminiumpigmente werden in großem Umfang in Beschichtungen als Effektpigmente eingesetzt. Unter Effektpigmenten versteht man Pigmente, die eine gerichtete Reflexion an überwiegend flächig ausgebildeten, orientierten metallischen oder stark lichtbrechenden Partikeln aufweisen (DIN 5594). Sie sind stets plättchenförmig und haben verglichen mit Farbpigmenten sehr große Partikeldurchmesser. Ihre optischen Eigenschaften werden durch Reflexion und Interferenz bestimmt. Je nach Transparenz, Absorption, Dicke, Ein- oder Mehrschichtenaufbau zeigen die Effektpigmente metallischen Glanz, Perlglanz, Interferenz oder Interferenzreflexion. Hauptanwendungsbereich sind Kosmetik und Automobilsektor, daneben Kunststoffeinfärbung, Anstrichmittel, Lederbeschichtungen, Druckindustrie und Keramikindustrie. (Für eine umfassende Darstellung des technischen Hintergrunds vgl. W.Ostertag, Nachr. Chem. Tech. Lab. 1994, 9, 849.)

Die am häufigsten verwendeten Aluminiumpigmente sind Aluminiumflakes oder Pigmente auf der Basis plättchenförmiger Cu/Zn-Legierungen und beschichtete Glimmerplättchen, wobei Aluminiumpigmente typischen Metallglanz, beschichtete Glimmerplättchen dagegen typischen Perlglanz zeigen.

In den vergangenen Jahren hat der Bedarf an farbigen Effektpigmenten stark zugenommen. Daher wurden z.B. oxidbelegte Kupfer- und Messingplättchen, mit Übergangsmetalloxiden beschichtete Substrate wie Moskovit, Phlogopit oder Glas, Guanin-Einkristalle (Fischsilber), BiOCl-Einkristalle, plättchenförmige Hämatit-Einkristalle, plättchenförmige Phthalocyanine, mikronisiertes Titandioxid, polierter Aluminiumgrieß, Eisenoxid oder zerkleinerte dünne Mehrschichtenfilme mit Fabry-Perot-Struktur als Effektpigmente eingesetzt.

Durch Einfärben von Aluminiumpigmenten können demgegenüber farbige Pigmente mit verbesserter Deckfähigkeit verglichen mit Perlglanzpigmenten sowie guten koloristischen Möglichkeiten hergestellt werden. Die Einfärbung erfolgt dabei entweder durch Fixieren von Farbpigmenten mittels Polymeren, durch Belegen mit Oxiden unterschiedlicher Metalle nach verschiedensten Verfahren, durch Belegen mit einer farbpigmenthaltigen Oxidschicht oder durch Oxidation.

Gemäß US-4,328,042 und EP-A-0 33 457 werden Aluminiumplättchen durch Abscheiden von Eisenoxid aus Eisenpentacarbonyl im technisch sehr aufwendigen Wirbelschichtverfahren eingefärbt. Hierbei entstehen goldfarbene Aluminiumpigmente.

Gemäß US-5,037,475 werden Farbpigmente auf der Metalloberfläche durch carboxylgruppenhaltige Polymere fixiert. Die erhaltenen Pigmente zeigen jedoch nur eine geringe Farbintensität.

Durch Fixierung von polymerbeschichteten Farbpigmenten auf der Metalloberfläche mittels elektrostatischer Kräfte werden Aluminiumpigmente gemäß WO 91/04293 (PCT/US90/05236) eingefärbt.

Entsprechend EP-A-0 328 906 werden Metallpigmente durch kontrollierte Hydrolyse einer organischen Titanatesterverbindung mit einer Titandioxidschicht belegt. Verschiedene Farbtöne lassen sich durch Variation der Dicke der Oxidschicht erzielen. Hierfür müssen genau kontrollierte Reaktionsbedingungen eingehalten werden, wie pH und Zutropfgeschwindigkeit. Zur Erzielung von Farbeffekten ist zudem Kalzinierung erforderlich, die jedoch wegen des niedrigen Schmelzpunkts von Aluminium für Aluminiumpigmente nur schlecht durchführbar ist.

US-4,978,394 beschreibt die Herstellung Titandioxidbeschichteter Aluminiumpigmente durch technisch sehr aufwendige chemische Gasphasenbeschichtung (chemical vapor deposition, CVD).

In US-4,158,074 wird die Herstellung farbiger Aluminiumpigmente durch Beschichten mit einem Film aus hydratisiertem Metalloxid offenbart. Der Film wird durch Behandeln feiner Aluminiumplättchen in alkalischer Lösung eines Eisen-, Nickel-, Kobalt-, Zink- oder Kupfersalzes bei erhöhter Temperatur durch elektrochemische Reaktion der Metallsalze erzeugt.

US-5,261,955 offenbart einen Sol-Gel-Prozess zur Herstellung farbiger Metallpigmente, wobei die Metallplättchen in einem Sol eines anorganischen Salzes dispergiert werden, nach Filtration in einer Lösung einer anorganischen Verbindung, z.B. Kobaltnitrat, in einem organischen Lösungsmittel dispergiert werden und schließlich durch Erhitzen eine Sol-Gel-Schicht auf den Plättchen gebildet wird.

Entsprechend DE 1 95 01 307.7 (Eckart-Werke) können Aluminiumpigmente in verschiedensten Farbtönen wie z.B. Blau, Rot, Violett und Gold nach einem apparativ einfachen Verfahren durch kontrollierte Hydrolyse von Metallsäureestern in Gegenwart von Farbpigmenten in einem organischen Lösungsmittel eingefärbt werden.

JP-A-61-130375 offenbart eine goldfarbenes Aluminiumpigment, hergestellt durch Behandeln von Aluminiumpulver mit Dichromat, Natriumfluorid und oberflächenaktiven Mitteln in saurer Lösung, Trocknen und Behandeln mit einem Fettsäurederivat. Andere Farbtöne als Gold lassen sich mit diesem Verfahren nicht erzielen. Zudem stellen die Toxizität der verwendeten Chemikalien und ihr hoher Preis einen gravierenden Nachteil des Verfahrens dar.

US-3,067,052 beschreibt farbige Aluminiumpigmente, die durch Oxidation von Aluminiumpulver mit $KMnO_4$-Lösung gegebenenfalls unter Zusatz eines Reduktionsmittels hergestellt werden. Der Farbton dieser Pigmente ist golden, gegebenenfalls je nach Reduktionsmittel auch mit grünlichem oder rötlichem Ton. Auch hier wirkt sich die Toxizität des Oxidationsmittels nachteilig aus.

Der Derwent Abstract 85-095044 (JP 830141613) offenbart ein aus monolytischen Partikel bestehendes Pigment, wobei jeder der Partikel (a) einen metallischen Aluminiumbereich und (b) einen Aluminiumoxidbereich aufweist. Dieses Pigment wird durch partielle elektrochemische Oxidation einer Aluminiumfolie mit anschließender Pulverisierung hergestellt.

Die bekannten Verfahren zur Einfärbung von Aluminiumpigmenten sind alle aufwendig, teuer oder wegen der Toxizität der Reagenzien nachteilig. Die Aufgabe der Erfindung besteht daher darin, farbige Aluminiumpigmente verschiedener Farbtöne mit gutem Glanz und hoher Farbintensität zur Verfügung zu stellen, die auf sehr einfache, technisch unaufwendige Weise durch Einsatz harmloser Reagenzien hergestellt werden können.

Diese Aufgabe wird gelöst durch oxidierte Aluminium- oder Aluminiumlegierungs-Pigmente mit einem Gehalt im metallischm Aluminium von nicht mehr als 90 Gew.-% bezogen auf das Gesamtgewicht, die durch Oxidation plättchenförmiger Aluminium- oder Aluminiumlegierungs-Pigmente bei pH 7 bis pH 12 in einem Gemisch aus Wasser und einem oder mehreren wassermischbaren Lösungsmitteln erhältlich sind, wobei der Wassergehalt des Gemischs 3 bis 60 Gew.-% bezogen auf das Gemisch beträgt, und die Aluminium- oder Aluminiumlegierungs-Pigmente vor der Oxidation keiner Entfettungsbehandlung unterzogen werden und die auf die Aluminium- oder Aluminiumlegierungs-Pigmente bezogene Wassermenge 10 bis 120 Gew.-% insbesondere 15 bis 55 Gew.-% beträgt.

Ein weiterer Aspekt der Erfindung besteht in einem Verfahren zur Herstellung der farbigen oxidierten Metallpigmente durch Oxidation plättchenförmiger Metallpigmente bei pH 7 bis 12 in einem Gemisch aus Wasser und einem oder mehreren wassermischbaren Lösungsmitteln, wobei der Wasseranteil des Gemisches von 3 bis 60 Gew.-% bezogen auf das Gemisch beträgt, dadurch gekennzeichnet, daß die Wassermenge bezogen auf das Metall 10 bis 120 Gew.-%, bevorzugt 15 bis 55 Gew.-% beträgt.

Darüberhinaus betrifft die Erfindung die Verwendung der oxidierten farbigen Pigmente als Effektpigmente sowie ihre

Verwendung als Basispigmente für die Beschichtung mit farbpigmenthaltigen Oxidschichten nach dem Verfahren gemäß DE 1 95 01 307.7.

Die Oxidation von Aluminiumpigmenten in wäßrigen Medien verläuft üblicherweise wegen der großen Oberfläche der Pigmente sehr stark exotherm nach der Gleichung

$$2\,Al + (3+n)\,H_2O \longrightarrow Al_2O_3 \times n\,H_2O + 3\,H_2,$$

wobei die Pigmente unter Verlust der Pigmenteigenschaften vollständig oxidiert werden.

Erste Untersuchungen zur Einfärbung von Aluminiumpigmenten durch kontrollierte Oxidation in kochenden alkoholischen Dispersionen und über den Reaktionsmechanismus der Oxidation sind bereits in L.J.Virin, Zurnal prikladnoj chimii 32, Nr.5, 1050 beschrieben. Die Oxidation wird nach Virin in Lösungsmittelgemischen mit 20 bis 35 Gew.-% Wasseranteil bezogen auf das Gemisch durchgeführt. Die Wassermenge bezogen auf Aluminium beträgt bei diesem Verfahren 400 bis 700 Gew.-%. Als Ausgangsmaterial wird ein sehr grobes (12 000 cm$^2$/g), stearinsäurebelegtes leafing-Aluminiumpigment verwendet, das vor der Oxidation mit Aceton in einem aufwendigen Verfahren weitgehend entfettet werden muß. Praktisch ist das Verfahren jedoch nicht verwendbar, da unter den beschriebenen Bedingungen lediglich Aluminiumpigmente mit einer matten grauen bis graubraunen Farbe erhalten werden, die zudem so stark agglomeriert sind, daß sie als Effektpigmente nicht einsetzbar sind.

Es wurde nun festgestellt, daß unter speziellen Bedingungen überraschenderweise dennoch eine Einfärbung von Aluminiumpigmenten durch kontrollierte Oxidation in wässerigen alkoholischen Lösungen möglich ist, ohne daß die Pigmentpartikel unter Verlust der Pigmenteigenschaften agglomerieren. Die erfindungsgemäßen Pigmente weisen daher attraktive Farbtöne mit hohem Metallglanz auf, der vergleichbar oder sogar besser ist als der der Ausgangspigmente. Die erfindungsgemäßen Pigmente zeigen Farbtöne im Bereich von hellgold, nickel, gold, dunkelgold bis bronze und einen hervorragenden Glanz.

Mit zunehmendem Oxidgehalt wird üblicherweise die Oberfläche der Pigmentplättchen rauher, parallel dazu verlieren die Pigmente ihren Metallglanz und die Farbe tendiert zu matten, grauen bis grauschwarzen Tönen. Konventionelle Aluminiumpigmente für dekorative Zwecke weisen daher in der Regel einen Metallgehalt von ca. 95 bis 98 Gew.-% auf. Aluminiumpigmente für technische Einsatzgebiete, beispielsweise für Porenbetonherstellung, Feuerwerkskörper oder Sprengstoffe liegen im Metallgehalt typischerweise zwischen 95 und 85 Gew.-%. Lediglich qualitativ minderwertige Pigmente haben in Ausnahmefällen einen noch niedrigeren Metallgehalt. Überraschenderweise zeigen die erfindungsgemäßen Pigmente bei einem Metallgehalt von etwa 20 bis nicht mehr als 90 Gew.-% jedoch einen hervorragenden Metallglanz. Dies ist darauf zurückzuführen, daß beim erfindungsgemäßen Herstellungsverfahren in einem oxidativen Glänzprozeß gegebenenfalls aus dem Mahlprozeß stammende, im Ausgangsmaterial vorhandene graue Feinstanteile aufgelöst und die Plättchenkanten gerundet werden. Zudem scheiden sich bei dem beanspruchten Verfahren äußerst homogene, gleichmäßig dicke Oxidschichten ab, so daß der Metallglanz erhalten bleibt.

Die erfindungsgemäßen Pigmente bestehen daher aus einem Aluminiumkern bzw. einem Kern aus einer Aluminiumlegierung und einer Beschichtung aus hydratisiertem Aluminiumoxid, das sich entsprechend der vorstehend genannten Reaktionsgleichung bildet. Im Fall von Aluminiumlegierungen enthält die hydratisierte Oxidschicht entsprechende Anteile an hydratisierten Oxiden der Legierungsbestandteile.

Die Farbe der erfindungsgemäßen Pigmente wird mit zunehmendem Oxidationsgrad intensiver und dunkler. Sie läßt sich durch Variation der Verfahrensparameter, insbesondere von Temperatur, Wasser- und Basenmengen, einstellen. Die jeweils zur Erzielung eines bestimmten Farbtons geeigneten Bedingungen lassen sich leicht mittels orientierender Routineversuche ermitteln.

Im Vergleich mit ihren Ausgangspigmenten weisen die oxidierten Produkte bei der Grenzkornsiebung nach DIN 53196 bzw. ASTM 11 bei Verwendung der gleichen Siebmaschenweiten gleiche oder bis maximal 2 % höhere Rückstandswerte auf als die entsprechenden Ausgangsmaterialien. Demgegenüber zeigen die nach der Methode von Virin mit größerem Waserüberschuß hergestellten agglomerierten oxidierten Produkte Siebrückstände in der Größenordnung von ein bis zwei Zehnerprozenten mehr auf (vgl. Tabellen 1 und 3).

Nach dem erfindungsgemäßen Verfahren werden plättchenförmige Aluminiumpigmente ohne vorherige Entfettung in einem Gemisch aus einem oder mehreren wassermischbaren Lösungsmitteln, Wasser und gegebenenfalls einer geeigneten Base bei einem pH-Wert von 7 bis 12 oxidiert, wobei der Wasseranteil im Lösungsmittelgemisch bezogen auf das Gemisch 3 bis 60 Gew.-% beträgt, bevorzugt 5 bis 35 Gew.-%. Die Wassermenge bezogen auf Aluminium beträgt jedoch nur 10 bis 120 Gew.-%, bevorzugt 15 bis 55 Gew.-%. Entscheidend für das erfindungsgemäße Verfahren ist letzterer Wert. Liegt nämlich die Wassermenge bezogen auf Aluminium unterhalb 10 Gew.-%, so findet keine oder nur sehr schwache Oxidation statt. Liegt er über 120 Gew.-%, so erhält man agglomerierte Produkte.

Als Ausgangspigmente können alle für den Bereich dekorativer Beschichtungen und Zubereitungen geeigneten Aluminiumpigmente eingesetzt werden. Bevorzugt werden non-leafing-Pigmente eingesetzt, da sie verglichen mit leafing-Pigmenten gleicher Partikelgrößenverteilung glänzendere, intensiver gefärbte Produkte ergeben. Die Ausgangspigmente sind bevorzugt aus Aluminium einer Mindesteinheit von 99,5 Gew.-% hergestellt. Die Ausgangspigmente können sowohl als Paste als auch als Metallpulver eingesetzt werden, wobei die handelüblichen Pasten meist 65 Gew.-% Pigmentanteil und 35 Gew.-% Lösungsmittelanteil, meist Kohlenwasserstoffe, enthalten.

Der Farbton des erfindungsgemäßen oxidierten Aluminiumpigments hängt praktisch nicht von den Legierungsbestandteilen im Ausgangspigment ab, wenn deren Anteil weniger als 5 Gew.-% bezogen auf das Ausgangspigment beträgt. Im wesentlichen erhält man immer die erwähnte Farbskala von hellgold bis bronze. Aluminiumlegierungspigmente mit Fremdmetallanteilen von mehr als 5 Gew.-% bezogen auf das Ausgangspigment liefern jedoch andere Farbtöne wie z.B. gelb-, grün-, rot- und rotbraunstichige Goldtöne bis hin zu dunkelbraun und schwarz. Als Fremdmetalle geeignet sind z.B. Eisen, Mangan, Kupfer, Vanadium, Chrom, Nickel, Cobalt, Silizium, Magnesium, Zink oder Titan.

Als wassermischbare Lösungsmittel sind besonders Alkohole, Glykole und bei Raumtemperatur flüssige Alkohole wie bevorzugt Ethanol, n-Propanol, i-Propanol, n-Butanol, i-Butanol, Methoxypropanol, Aceton oder Butylglykol geeignet. Es kann ein Lösungsmittel allein oder ein Gemisch verwendet werden. Verwendet man technische Lösungsmittel die merkliche Wassermengen enthalten, so sind diese gegebenenfalls bei der Rezepturberechnung für die Oxidation zu berücksichtigen.

Die Ausgangspigmente werden in dem oben definierten Lösungsmittel-Wasser-Gemisch dispergiert. Gegebenenfalls wird der pH mit geeigneten Basen wie aliphatischen oder aromatischen Aminen, Ethanolaminen oder anorganischen Basen, z.B. Triethylamin, n-Butylamin, i-Butylamin, Dimethanolamin, Dietylamin, Ethanol, Pyridin oder Natriumacetat auf pH 7 bis 12 eingestellt, und die Mischung bei einer Temperatur zwischen Raumtemperatur und dem Siedepunkt des Lösungsmittelgemisches, bevorzugt bei 50 bis 100 °C gerührt.

Der Reaktionsverlauf läßt sich anhand der Wasserstoffentwicklung verfolgen und nimmt folgenden Verlauf: an eine Induktionsphase ohne oder mit sehr geringer Wasserstoffentwicklung schließt sich eine Phase mit rasch zunehmender, mehr oder weniger stürmischer Wasserstoffentwicklung an. Schließlich folgt mit zunehmender Oxidschichtdicke auf den Pigmenten eine Phase, in der die Wasserstoffentwicklung abnimmt und schließlich zum Stillstand kommt. Die Reaktion wird nach dem erfindungsgemäßen Verfahren bis zur Beendigung der Wasserstoffentwicklung durchgeführt.

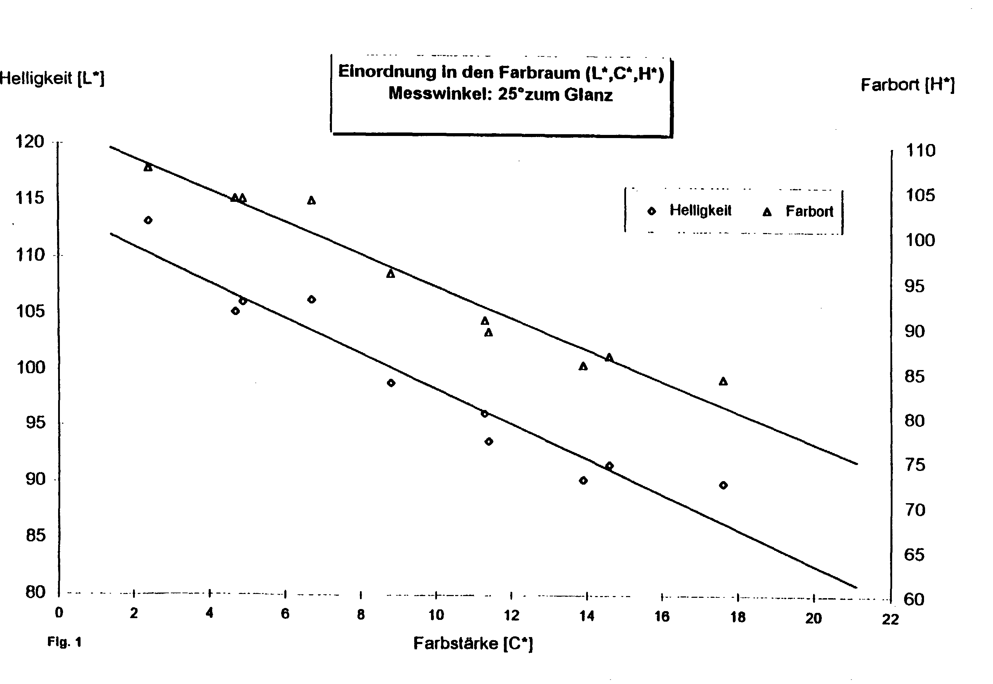

Die erreichbare Farbskala läßt sich anhand von Farbmessungen mit der unten definierten Prüfmethode 1 an deckend gespritzten Metallic-Zweischicht-Lackapplikationen im genormten CIE-Lab Farbraum (DIN 5033) definieren. Die Messung erfolgt mit einem Goniospektralphotometer, bei einem Meßwinkel von 25°. Die koloristisch interessanten Farbtöne weisen bei C*-Werten zwischen etwa 2 und 20 L*-und H*-Farbkoordinaten auf, die in diesem Bereich mit C* annähernd entsprechend den Formeln L* = 116-(1,7 C*) und H* = 113-(1,9 C*) zusammenhängen. (Vgl. Fig.1). Die erfindungsgemäßen Pigmente weisen L*-Werte im Bereich von etwa 90 bis etwa 115, C*-Werte im Bereich von etwa 1 bis etwa 15 und H*-Werte von etwa 85 bis etwa 108 auf, während die nicht oxidierten Ausgangspigmente weit höhere H*-Werte von über 180 zeigen. (Vgl. Tabelle 3).

In manchen Anwendungsgebieten, beispielsweise Metalliclacken für die Automobilindustrie, werden die Aluminumpigmente bei der Verarbeitung hohen Scherkräften ausgesetzt. Dies führt zu einer Beeinträchtigung der optischen Pigmenteigenschaften durch Nachdispergierung von agglomerierten Feinanteilen bis hin zu mechanischen Beschädigungen der Pigmentteilchen. Für besondere mechanische Belastungen wurden daher mechanisch stabilere Spezialpigmente entwickelt. Dabei handelt es sich um sehr dicke Aluminiumpigmente ohne Feinanteile. Diese Pigmente sind zwar relativ stabil gegen mechanische Belastungen, weisen aber erhebliche Nachteile wie verstärkte Absetzneigung in flüssigen Medien, geringe Deckfähigkeit und schlechte Pigmentorientierung bei der Applikation auf.

Die erfindungsgemäßen Pigmente zeigen demgegenüber eine hervorragende mechanische Beständigkeit ohne die genannten Nachteile. Diese ist auf den fehlenden agglomerierten Feinanteil und insbesondere darauf zurückzuführen, daß die erfindungsgemäßen Pigmentplättchen aus einem Metallkern bestehen, der beidseitig mit homogenen, gleichmäßig dicken Oxidschichten versteift ist. Voraussetzung für den Versteifungseffekt ist eine gewisse Dicke der Oxidschichten, ausgedrückt durch den Metallgehalt der Pigmente von nicht mehr als 90 Gew.-%, bevorzugt nicht mehr als 85 Gew.-%.

Eine geeignete Prüfmethode für die mechanische Beständigkeit von Pigmenten in einer Beschichtungszusammensetzung ist der "Waring-Blender-Test" mit einem Mischgerät der Fa. Waring (New Hartford, USA). Dabei wird die pigmentierte Zusammensetzung im Waring-Blender mechanisch sehr hoch belastet und anschließend anhand einer Applikation visuell oder farbmetrisch mit unbelastetem Material verglichen (s. u. Prüfmethode 2). Bei der farbmetrischen Beurteilung wird die maximale Abweichung DE mit einem Goniospektralphotometer bestimmt. Während konventionelle Aluminiumpigmente im Meßwinkelbereich von 20 bis 110° DE-Werte von über ± 10 aufweisen, liegen die DE-Werte für handelsübliche ringleitungsstabile Spezialpigmente bei ±2 bis ±5. Die erfindungsgemäßen Pigmente liegen im Fall mäßig oxidierter Produkte entsprechend Metallgehalten von etwa 65 bis 85 Gew.-% im Bereich von ±5 DE-Einheiten. Stärker oxidierte erfindungsgemäße Pigmente entsprechend Metallgehalten von unter 65 Gew.-% erreichen DE-Werte von unter ±0,5.

Trotz ihrer relativ dicken Oxidschichten ist die chemische Stabilität der erfindungsgemäßen Pigmente, insbesondere gegenüber Wasser in wäßrigen Beschichtungszusammensetzungen, oft nicht ausreichend. Die üblichen bekannten Verfahren für die chemische Stabilisierung konventioneller Aluminiumpigmente (vgl. R. Besold, W. Reißer, E. Roth, Farbe + Lack 1991, 97, 311) sind jedoch ohne weiteres anwendbar, so z.B. Inhibierung mit anorganischen Korrosionsinhibitoren oder Einkapselung mit anorganischen oder organischen Schutzschichten, wobei Pigmente mit ausgezeichneter chemischer Stabilität erhalten werden.

Die Pigmente sind hervorragend als Effektpigmente in allen ihren Anwendungsbereichen einsetzbar.

Besonders vorteilhaft ist ihre Verwendung als Basismaterial für eine zusätzliche Einfärbung mit anorganischen oder organischen Farbpigmenten, beispielsweise gemäß PCT/US90/05236 oder US-5,037,475 und insbesondere gemäß DE 1 95 01 307.7. Durch Überlagerung der Farbe der oxidierten Aluminiumpigmente mit der Farbe der zusätzlich auf die Pigmentoberflächen aufgebrachten Pigmente erhält man Pigmente mit neuen Farbeffekten und einer Farbintensität, die durch Einfärbung von konventionellen Aluminiumpigmenten mit Farbpigmenten nicht erhältlich ist.

Im folgenden wird die Erfindung anhand von Beispielen verdeutlicht.

**PRÜFMETHODEN**

Prüfmethode 1:
Farbmetrische Prüfung

Die farbmetrische Prüfung wurde bei einem Meßwinkel von 25° mit dem Goniospektralphotometer Multiflash M 45 der Fa. Optronik GmbH, Berlin an den folgenden jeweils deckend gespritzten Zweischicht-Metalliclackierungen durchgeführt.

a) Basislack

| | |
|---|---|
| Hitzehärtbares, ölfreies Polyesterharz (Alftalat AN 950; 79 %-ig in Xylyol, Hoechst) | 70 g |
| Celluloseacetobutyrat-Lösung 381-1-10; (18 %-ig in Butanol, Krahn) | 251 g |
| Butylurethan-Formaldehyharz (Uresin B, Hoechst) | 11,5 g |

(fortgesetzt)

| | |
|---|---|
| Nichtplastifiziertes hochreaktives Melamin Formaldehyd-Harz (Maprenal MF 590/55 % Lff.; Hoechst) | 21,5 g |
| Hochdisperses, amorphes Siliciumdioxid (Aerosil 200, Degussa) | 4,0 g |
| Butylglykol | 23 g |
| Butylacetat/Xylol 1:1 | 27 g |

16,2 g der zu testenden Aluminiumpulver werden mit 54 g Xylol angeteigt und mit dem Basislack dispergiert. Der so erhaltene Prüflack wird mit Xylol/Butylacetat/Butylglykol 1:2:7 auf die Verarbeitungsviskosität von 15 s (Auslaufbecher nach DIN 4 mm) eingestellt. Man läßt 15 Minuten bei Raumtemperatur ablüften und appliziert anschließend den Klarlack.

b) Klarlack:

| | |
|---|---|
| Standocryl 2K-Klarlack (Mischung synthetischer Kunstharze, Herberts) | 40 g |
| 2K Härter kurz (Mischung synthetischer Kunstharze, Herberts) | 20 g |
| 2K Verdünnung lang 11012 (Mischung von n-Butylacetat, 2-Methoxy-1-methylethylacetat, 2-Methoxypropylacetat, Herberts) | 10 g |

Die Viskosität wird auf 20 s/DIN 4mm bei 20 °C eingestellt. Man läßt 15 Minuten bei Raumtemperatur ablüften und brennt anschließend bei 130 °C ein. Trockenfilm-Schichtdicken:
Basislack ca 18 μm, Klarlack ca. 40 μm.

Prüfmethode 2:
Mechanische Stabilität

400 g des unter "Farbmetrische Prüfung" beschriebenen aluminiumpigmentierten Basislacks werden in den Waring-Blender (Fa. Waring, New Hartford, USA) eingefüllt und unter Wasserkühlung während 8 Minuten auf Stufe "high" belastet und anschließend farbmetrisch wie unter Prüfmethode 1 beschrieben anhand von deckend gespritzten Zweischicht-Metalliclackierungen mit entsprechendem unbelastetem Material verglichen.

Prüfmethode 3:
Gehalt an metallischem Aluminium in Aluminiumpigmenten

Eine Probe des Aluminiumpigments wird in 15 %-iger wässeriger Natronlauge gelöst. Der entstehende Wasserstoff wird in einer Gasbürette aufgefangen und dient zur gasvolumetrischen Berechnung des Metallgehalts.

Prüfmethode 4:
Metalleffekt (ME) und Abbildeschärfe (DOI)

Diese Werte werden an den unter Prüfmethode 1 beschriebenen deckend gespritzten Zweischicht-Metalliclackierungen bestimmt. Der Metalleffekt ME wird mit dem Zeiss Goniophotometer GP 3 (Beleuchtungswinkel 45°, Meßwinkel 45° bzw. 7° Differenz zum Glanz) gemessen, wobei ME = Remission bei 7°/Remission bei 45° ·100. Die Abbildeschärfe (DOI) wird mit dem Dorigon D 47 R 6 F der Fa. Hunter gemessen.

**BEISPIELE**

Vergleichsbeispiele 1 bis 4

Bei den Vergleichsbeispielen 1 und 2 werden jeweils 5 g leafing Aluminiumpulver (Oberfläche 12 000 cm$^2$/g, Siebrückstand > 71 µm 12 %, 3,2 % Stearinsäure) zunächst mit Aceton bis auf einen Restgehalt von 0,8 % entfettet und anschließend mit 100 g Wasser/Ethanol-Mischungen (Wassergehalte s. Tabelle 1) unter Rückfluß bis zur Beendigung der Wasserstoffentwicklung erhitzt. Die Produkte werden über einen Büchnertrichter abgesaugt und jeweils bei 100 °C im Vakuum getrocknet.

Bei den Vergleichsbeispielen 3 und 4 werden auf die gleiche Weise jeweils 20 g eines non-leafing Aluminiumpigments (Stapa Metallux 8154, Siebrückstand > 25 µm < 0,1 %, Eckart-Werke) ohne vorherige Entfettung in siedenden Ethanol-Wasser-Mischungen oxidiert (Wassergehalte s. Tabelle 1), abgesaugt und bei 90 °C im Vakuum getrocknet.

In allen Fällen werden matte, stark agglomerierte Produkte mit grauer Farbe erhalten.

Die weiteren Eigenschaften der Produkte sind in Tabelle 1 zusammengestellt.

Beispiele 1 bis 3

50 g Aluminiumpigment Stapa Metallux 8154 (Eckart-Werke) werden in einem Lösungsmittel (Art und Einwaage s. Tabelle 2) dispergiert. Anschließend wird Wasser und gegebenenfalls eine Base (Art und Einwaagen s. Tabelle 2) zugegeben und auf den Siedepunkt der Mischung erhitzt. Nach Beendigung der Wasserstoffentwicklung läßt man auf Raumtemperatur abkühlen, rührt noch weitere 17 Stunden, trennt das Produkt durch Filtration ab und trocknet bei 90 °C im Vakuum. Die Eigenschaften der Produkte sind in Tabelle 3 dargestellt.

Beispiele 4 bis 6

50 g Aluminiumpigment Stapa Metallux 2154 (Siebrückstand > 25 µm < 0,5 %, Eckart-Werke) werden entsprechend dem Verfahren aus den Beispielen 1 bis 3 oxidiert. Die Ergebnisse sind in Tabelle 3 dargestellt.

Beispiele 7 und 8

50 g Aluminiumpigment Stapa Metallux 212 (Siebrückstand > 63 µm < 0,2 %, Eckart-Werke) werden entsprechend dem Verfahren aus den Beispielen 1 bis 3 oxidiert. Die Ergebnisse sind in Tabelle 3 dargestellt.

Beispiel 9

50 g Aluminiumpigment Stapa Metallux 2196 (Siebrückstand > 25 µm < 0,05 %, Eckart-Werke) werden entsprechend dem Verfahren aus den Beispielen 1 bis 3 oxidiert. Die Ergebnisse sind in Tabelle 3 dargestellt.

Beispiel 10

50 g des in den Vergleichsbeispielen 1 und 2 beschriebenen leafing-Aluminiumpigments werden entsprechend dem Verfahren aus den Beispielen 1 bis 3 oxidiert.
Die Ergebnisse sind in Tabelle 3 dargestellt.

Beispiele 11 bis 13

10 g eines Aluminiumlegierungspigments (Art der Legierung s. Tabelle 4) werden in 30 ml Isopropanol dispergiert. Man gibt
4 g Wasser und 0,12 g Ethylendiamin zu und rührt anschließend während 6 Stunden bei 80 °C. Nach weiteren 17 Stunden Rühren bei Raumtemperatur trennt man das Produkt durch Filtration ab und trocknet bei 90 °C im Vakuum. Die Farben der oxidierten Produkte sind in Tabelle 4 dargestellt.

## Tabelle 1:     Oxidation von Aluminiumpigmenten, Vergleichsbeispiele 1 – 4

| Vergleichs-beispiele | Wasser [g] | Wasser [g]/ Aluminium [g] [%] | Siebrückstand | | Metallgehalt [%] | Farbe visuell | Bemerkungen |
|---|---|---|---|---|---|---|---|
| | | | >25μm [%] | >71μm [%] | | | |
| 1 | 35 | 700 | --- | 70 | 51 | grau | stark agglomeriert |
| 2 | 20 | 400 | --- | 45 | 64 | graubraun | stark agglomeriert |
| 3 | 140 | 700 | >99 | --- | 17 | grau | stark agglomeriert |
| 4 | 80 | 400 | >99 | --- | 36 | graubraun | stark agglomeriert |

EP 0 848 735 B1

## Tabelle 2:     Oxidation von Aluminiumpigmenten, Beispiele 1 - 10

| Beispiele | Lösungsmittel | [g] | Wasser [g] | Wasser [g]/ Aluminium [g] [%] | Wasser [g]/ Lösung [g] [%] | Base | [g] |
|---|---|---|---|---|---|---|---|
| 1 | 2-Propanol | 118 | 23 | 46 | 16 | Ethylendiamin | 0,6 |
| 2 | 2-Propanol | 118 | 11 | 22 | 9 | Ethylendiamin | 0,6 |
| 3 | Ethanol | 196 | 20 | 40 | 9 | --- | --- |
| 4 | Methoxypropanol | 121 | 26 | 52 | 18 | Ethylendiamin | 0,6 |
| 5 | 2-Propanol | 118 | 23 | 46 | 16 | Butylamin | 1,4 |
| 6 | Aceton | 119 | 20 | 40 | 14 | Ethylendiamin | 0,6 |
| 7 | 2-Propanol | 118 | 20 | 40 | 14 | Ethylendiamin | 1,2 |
| 8 | 2-Propanol | 118 | 8 | 16 | 6 | Ethylendiamin | 1,2 |
| 9 | 2-Propanol | 236 | 40 | 80 | 14 | Ethylendiamin | 0,6 |
| 10 | 2-Propanol | 118 | 20 | 40 | 14 | Ethylendiamin | 0,6 |

EP 0 848 735 B1

## Tabelle 3: Produkteigenschaften: Beispiele 1 - 10

| Beispiele | metall.-Aluminium [%] | Siebrückstand >25µm [%] | >63µm [%] | >71µm [%] | mechanische Stabilität Waring Blendor Test [dE*] 25° | 45° | 70° | Farbe visuell | Farbmessung 25° Lichtart D65/10 L* | C* | H* | DOI-Wert | ME-Wert |
|---|---|---|---|---|---|---|---|---|---|---|---|---|---|
| Ausgangsmaterial | 97 | 0,1 | --- | --- | 5,4 | 8,7 | 9,1 | silber | 106,6 | 1,3 | 225,0 | 71 | 290 |
| 1 | 56 | 0,8 | --- | --- | 0,4 | 0,3 | 0,4 | bronze | 98,2 | 11,3 | 90,7 | 70 | 357 |
| 2 | 74 | 0,6 | --- | --- | 1,1 | 0,7 | 1,1 | nickel | 105,2 | 4,7 | 104,0 | 58 | 278 |
| 3 | 58 | 1,5 | --- | --- | 0,2 | 0,2 | 0,1 | hellgold | 106,3 | 6,7 | 103,8 | 60 | 289 |
| Ausgangsmaterial | 98 | 0,5 | --- | --- | 9,6 | 7,0 | 10,3 | silber | 107,3 | 1,2 | 219,9 | 72 | 430 |
| 4 | 55 | 1,1 | --- | --- | 0,3 | 0,3 | 0,2 | bronze | 98,9 | 8,8 | 95,8 | 75 | 567 |
| 5 | 57 | 0,3 | --- | --- | 1,4 | 1,7 | 0,6 | bronze | 93,7 | 11,4 | 89,4 | 68 | 500 |
| 6 | 62 | 1,0 | --- | --- | 0,4 | 0,8 | 0,4 | dunkelgold | 90,3 | 13,9 | 85,7 | 66 | 520 |
| Ausgangsmaterial | 99 | --- | 0,2 | --- | 11,1 | 16,7 | 21,9 | silber | 110,2 | 0,8 | 185,4 | 44 | 810 |
| 7 | 80 | --- | 1,1 | --- | 3,3 | 1,6 | 1,0 | dunkelgold | 91,6 | 14,6 | 86,7 | 40 | 930 |
| 8 | 89 | --- | 1,0 | --- | 2,0 | 8,3 | 6,4 | nickel | 113,1 | 2,4 | 107,3 | 40 | 1320 |
| Ausgangsmaterial | 96 | 0,5 | --- | --- | 2,3 | 1,0 | 2,2 | silber | 105,9 | 1,7 | 232,4 | 89 | 175 |
| 9 | 27 | 0,5 | --- | --- | 0,1 | 0,1 | 0 | nickel | 106,1 | 4,9 | 104,0 | 66 | 100 |
| Ausgangsmaterial | 96 | --- | --- | 12 | 15,2 | 9,0 | 15,8 | silber | 107,7 | 1,1 | 211,5 | 40 | 350 |
| 10 | 70 | --- | --- | 12 | 1,6 | 2,7 | 3,2 | bronze | 98,9 | 8,8 | 95,8 | 40 | 557 |

EP 0 848 735 B1

Tabelle 4:

| Oxidation von Aluminiumlegierungspigmenten | | |
|---|---|---|
| Beispiel | Legierung | Farbe nach Oxidation |
| 11 | Al/5Y | gold |
| 12 | Al/20Ni/12,5Si/9,5Cu/ 0,6Fe/0,75Mn | schwarz |
| 13 | Al/2Si/2,2Fe/0,6Cu/ 1,2Mn/3Mg/0,5Cr/Zn/0,3Ti | braun-gold mit rosa Schimmer |

**Patentansprüche**

1. Oxidierte Aluminium- oder Aluminiumlegierungs-Pigmente mit einem Gehalt an metallischemAluminium von nicht mehr als 90 Gew.-%, bezogen auf das Gesamtgewicht, erhältlich durch Oxidation plättchenförmiger Aluminium- oder Alumlniumlegierungs-Pigmente bei pH 7 bis pH 12 in einem Gemisch aus Wasser und einem oder mehreren wassermischbaren Lösungsmitteln, wobei der Wassergehalt des Gemisches 3 bis 60 Gew.-% bezogen auf das Gemisch beträgt,
   **dadurch gekennzeichnet,**
   **daß** die Aluminium- oder Aluminiumiegierungs-Pigmente vor der Oxidation keiner Entfettungsbehandlung unterzogen werden und die auf die Aluminium- oder Aluminiumlegierungs-Pigmente bezogene Wassermenge 10 bis 120 Gew.-%, insbesondere 15 bis 55 Gew.-% beträgt.

2. Pigmente nach Anspruch 1,
   **dadurch gekennzeichnet ,**
   **daß** der Glanz ausgedrückt als ME-Wert einer deckend gespritzten Metallic-Zweischicht-Lackierung entsprechend Prüfmethode 1, gemessen mit einem Goniospektralphotometer nach Prüfmethode 4, mindestens 100 beträgt, bevorzugt mindestens 300.

3. Pigmente nach Anspruch 1 oder 2,
   **dadurch gekennzeichnet,**
   **daß** die Pigmente eine Farbe im Bereich von nickel, hellgold, gold, dunkelgold bis bronze aufweisen.

4. Pigmente nach einem oder mehreren der vorhergehenden Ansprüche,
   **dadurch gekennzeichnet,**
   **daß** sie aus Ausgangspigmenten aus Aluminium einer Mindesteinheit von 99,5 Gew.% hergestellt sind.

5. Pigmente nach einem oder mehreren der der vorhergehenden Ansprüche,
   **dadurch gekennzeichnet**
   **daß** sie aus einer Aluminiumlegierung bestehen, die mehr als 5 Gew.-% - bezogen auf den Metallgehalt der Pigmente - eines oder mehrerer von Aluminium verschiedener Metalle, vorzugsweise Eisen, Mangan, Kupfer, Vanadium, Chrom, Nickel, Cobalt, Silizium, Magnesium, Zink oder Titan, enthält.

6. Pigmente nach einem oder mehreren der vorhergehenden Ansprüche,
   **dadurch gekennzeichnet,**
   **daß** sie zusätzlich auf übliche Art chemisch stabilisiert sind, bevorzugt durch Einkapselung mit Schutzschichten oder durch Inhibierung mit Korrosionsinhibitoren.

7. Verfahren zur Herstellung oxidierter Metallpigmente nach einem der vorhergehenden Ansprüche durch Oxidation plättchenförmiger Aluminum- oder Aluminiumlegierungs-Pigmente bei pH 7 bis 12 in einem Gemisch aus Wasser und einem oder mehreren wassermischbaren Lösungsmitteln, wobei der Wasseranteil des Gemisches 3 bis 60 Gew.-% bezogen auf das Gemisch beträgt,
   **dadurch gekennzeichnet,**
   **daß** die Wassermenge des Gemisches bezogen auf das Metall 10 bis 120 Gew.-%, bevorzugt 15 bis 55 Gew.-% beträgt.

**8.** Verfahren nach Anspruch 7,
**dadurch gekennzeichnet,**
**daß** das wassermischbare Lösungsmittel aus der Alkohole, Glykole und bei Raumtemperatur flüssige Ketone, bevorzugt aus der Ethanol, n-Propanol, i-Propanol, n-Butanol, i-Butanol, Methoxypropanol, Aceton oder Butylglykol umfassenden Gruppe ausgewählt wird.

**9.** Verfahren nach Anspruch 7 oder 8,
**dadurch gekennzeichnet,**
**daß** die Reaktionstemperatur zwischen Raumtemperatur und dem Siedepunkt des Gemisches aus Wasser und Lösungsmittel liegt.

**10.** Verfahren nach einem oder mehreren der Ansprüche 7 bis 9, **dadurch gekennzeichnet, daß** der pH mit einer Base, bevorzugt ausgewählt aus der Triethylamin, n-Butylamin, Dimethylethanolamin, Diethylamin, Pyridin und Natriumacetat umfassenden Gruppe eingestellt wird.

**11.** Verwendung der Pigmente nach einem oder mehreren der Ansprüche 1 bis 6 als Effektpigmente.

**12.** Verwendung der Pigmente nach einem oder mehreren der Ansprüche 1 bis 6 als Basispigmente für die Beschichtung mit farbpigmenthaltigen Metalloxidschichten.

**Claims**

**1.** Oxidized aluminium or aluminium-alloy pigments having a metallic aluminium content of not more than 90% by weight, based on the overall weight, obtainable by oxidation of platelet-shaped aluminium or aluminium-alloy pigments at a pH from 7 to 12 in a mixture of water and one or more water-miscible solvents, the water content of the mixture being from 3 to 60% by weight, based on the mixture, **characterized in that** the aluminium or aluminium-alloy pigments are not subjected to any degreasing treatment prior to oxidation and the amount of water based on the aluminium or aluminium-alloy pigments is from 10 to 120% by weight, in particular from 15 to 55% by weight.

**2.** Pigments according to Claim 1, **characterized in that** the gloss, expressed as the ME value, of an opaquely sprayed two-coat metallic coating system in accordance with test method 1, measured using a goniospectrophotometer in accordance with test method 4, is at least 100, preferably at least 300.

**3.** Pigments according to Claim 1 or 2, **characterized in that** the pigments have a colour in the range from nickel, pale gold, gold, dark gold to bronze.

**4.** Pigments according to one or more of the preceding claims, **characterized in that** they have been prepared from initial pigments comprising aluminium with a minimum purity of 99.5% by weight.

**5.** Pigments according to one or more of the preceding claims, **characterized in that** they comprise an aluminium alloy containing more than 5% by weight-based on the metal content of the pigments - of one or more metals other than aluminium, preferably iron, manganese, copper, vanadium, chromium, nickel, cobalt, silicon, magnesium, zinc or titanium.

**6.** Pigments according to one or more of the preceding claims, **characterized in that** they are additionally stabilized chemically in a customary manner, preferably by encapsulation with protective coatings or by inhibition with corrosion inhibitors.

**7.** Process for producing oxidized metal pigments according to one of the preceding claims by oxidation of platelet-shaped aluminium or aluminium-alloy pigments at a pH of from 7 to 12 in a mixture of water and one or more water-miscible solvents, the water content of the mixture being from 3 to 60% by weight based on the mixture, **characterized in that** the amount of water in the mixture, based on the metal, is from 10 to 120% by weight, preferably from 15 to 55% by weight.

**8.** Process according to Claim 7, **characterized in that** the water-miscible solvent is selected from the group consisting of alcohols, glycols and ketones that are liquid at room temperature, preferably from the group consisting of ethanol, n-propanol, i-propanol, n-butanol, i-butanol, methoxypropanol, acetone and butyl glycol.

9. Process according to Claim 7 or B, **characterized in that** the reaction temperature is situated between room temperature and the boiling point of the water/solvent mixture.

10. Process according to one or more of Claims 7 to 9, **characterized in that** the pH is adjusted using a base selected preferably from the group consisting of triethylamine, n-butylamine, dimethylethanolamine, diethylamine, pyridine and sodium acetate.

11. Use of the pigments according to one or more of Claims 1 to 6 as effect pigments.

12. Use of the pigments according to one or more of Claims 1 to 6 as base pigments for coating with metal oxide layers containing colour pigment.


**Revendications**

1. Pigments d'aluminium oxydé ou d'alliages d'aluminium oxydé à teneur en aluminium métallique ne dépassant pas 90% en poids par rapport au poids total, obtenus par oxydation de pigments d'aluminium ou d'alliage d'aluminium en forme de plaquettes, à un pH de 7 à 12 dans un mélange d'eau et d'un ou plusieurs agents de dissolution miscibles à l'eau, la teneur en eau du mélange étant de 3 à 60% en poids par rapport au mélange, **caractérisés en ce que** les pigments d'aluminium ou d'alliage d'aluminium ne sont soumis avant l'oxydation à aucun traitement de dégraissage et la quantité d'eau rapportée aux pigments d'aluminium ou d'alliage d'aluminium représente 10 à 120% en poids, en particulier de 15 à 55% en poids.

2. Pigments selon la revendication 1, **caractérisés en ce que** le brillant, exprimé en valeur d'effet métallique (valeur ME) d'un laquage à deux couches métalliques obtenu par recouvrement par pulvérisation conformément à la méthode d'examen 1, mesurée avec un goniospectrophotomètre selon la méthode d'examen 4, est d'au moins 100 et de préférence au moins 300.

3. Pigments selon la revendication 1 ou 2, **caractérisés en ce que** les pigments présentent une couleur située dans le domaine du nickel, du doré clair, du doré, du doré foncé jusqu'à bronze.

4. Pigments selon l'une ou plusieurs des revendications précédentes, **caractérisés en ce qu'**ils sont préparés à partir de pigments de départ d'aluminium ayant une unité minimale de 99,5% en poids.

5. Pigments selon l'une ou plusieurs des revendications précédentes, **caractérisés en ce qu'**ils se composent d'un alliage d'aluminium qui contient plus de 5% en poids par rapport à la teneur en métal des pigments d'un ou plusieurs des métaux différents de l'aluminium choisis de préférence entre le fer, le manganèse, le cuivre, le vanadium, le chrome, le nickel, le cobalt, le silicium, le magnésium, le zinc ou le titane.

6. Pigments selon l'une ou plusieurs des revendications précédentes, **caractérisés en ce qu'**ils sont au surplus stabilisés chimiquement selon les méthodes habituelles, de préférence par encapsulation avec des couches de protection ou par inhibition avec des inhibiteurs de corrosion.

7. Procédé pour la préparation de pigments métalliques oxydés selon l'une des revendications précédentes, par oxydation de pigments d'aluminium ou d'alliages d'aluminium, à pH 7 à 12, dans un mélange d'eau et d'un ou plusieurs agents de dissolution miscibles à l'eau, la portion en eau du mélange représentant 3 à 60% en poids par rapport au mélange, **caractérisé en ce que** la quantité d'eau du mélange par rapport au métal représente 10 à 120% en poids, de préférence de 15 à 55% en poids.

8. Procédé selon la revendication 7, **caractérisé en ce que** l'agent de dissolution miscible à l'eau est choisi parmi les alcools, les glycols et les cétones liquides à température ambiante, de préférence entre l'éthanol, le n-propanol, le i-propanol, le n-butanol, le i-butanol, le méthoxypropanol, l'acétone ou le butylglycol.

9. Procédé selon l'une des revendications 7 ou 8, **caractérisé en ce que** la température de réaction est située entre la température ambiante et le point d'ébullition du mélange d'eau et de l'agent de dissolution.

10. Procédé selon l'une ou plusieurs des revendications 7 à 9, **caractérisé en ce que** le pH est réglé au moyen d'une base, choisie de préférence dans le groupe constitué par la triéthylamine, la n-butylamine, la diméthyléthanolamine, la diéthylamine, la pyridine et l'acétate de sodium.

11. Application des pigments selon l'une ou plusieurs des revendications 1 à 6 comme pigments à effets.

12. Application des pigments selon l'une ou plusieurs des revendications 1 à 6 comme pigments de base pour le surfaçage au moyen de couches d'oxydes métalliques contenant des pigments colorés.

Fig. 1

Helligkeit [L*]

Farbort [H*]

Einordnung in den Farbraum (L*,C*,H*)
Messwinkel: 25°zum Glanz

o Helligkeit    △ Farbort

Farbstärke [C*]

EP 0 848 735 B1